(19) Europäisches Patentamt
European Patent Office
Office européen des brevets

(11) **EP 4 541 106 B1**

(12) **EUROPEAN PATENT SPECIFICATION**

(45) Date of publication and mention
of the grant of the patent:
**08.04.2026 Bulletin 2026/15**

(21) Application number: **23739352.5**

(22) Date of filing: **15.06.2023**

(51) International Patent Classification (IPC):
*H04W 56/00* (2009.01)

(52) Cooperative Patent Classification (CPC):
**G01H 1/00; H04W 56/0035**

(86) International application number:
**PCT/IB2023/056216**

(87) International publication number:
**WO 2023/242797 (21.12.2023 Gazette 2023/51)**

(54) **METHOD OF SYNCHRONIZATION OF A WIRELESS SENSOR SYSTEM AND A SENSOR SYSTEM IMPLEMENTING SUCH A METHOD**

VERFAHREN ZUR SYNCHRONISATION EINES DRAHTLOSEN SENSORSYSTEMS UND SENSORSYSTEM ZUR DURCHFÜHRUNG SOLCH EINES VERFAHRENS

PROCÉDÉ DE SYNCHRONISATION D'UN SYSTÈME DE CAPTEURS SANS FIL ET SYSTÈME DE CAPTEURS METTANT EN OEUVRE UN TEL PROCÉDÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **16.06.2022 IT 202200012779**

(43) Date of publication of application:
**23.04.2025 Bulletin 2025/17**

(73) Proprietor: MOVE S.P.A.
**20121 Milano (MI) (IT)**

(72) Inventors:
• **FREDIANI, Ferdinando**
**55100 Lucca (LU) (IT)**
• **CORSI, Gabriele**
**53048 Sinalunga (SI) (IT)**
• **GALLI, Marco**
**55100 Lucca (LU) (IT)**
• **GIORGI, Matteo**
**56022 Fucecchio (FI) (IT)**
• **RUMBO, Alessandro**
**55011 Altopascio (LU) (IT)**

(74) Representative: **Biallo, Dario**
**Barzanò & Zanardo S.p.A.**
**Via Borgonuovo, 10**
**20121 Milano (IT)**

(56) References cited:
• **BING JIANG ET AL: "A clock drift compensation method for synchronous sampling in sensor networks", MEASUREMENT SCIENCE AND TECHNOLOGY, IOP, BRISTOL, GB, vol. 30, no. 2, 17 January 2019 (2019-01-17), pages 25103, XP020333839, ISSN: 0957-0233, [retrieved on 20190117], DOI: 10.1088/1361-6501/AAF6C7**
• **ALVARO ARAUJO ET AL: "Wireless Measurement System for Structural Health Monitoring With High Time-Synchronization Accuracy", IEEE TRANSACTIONS ON INSTRUMENTATION AND MEASUREMENT, IEEE, USA, vol. 61, no. 3, 1 March 2012 (2012-03-01), pages 801 - 810, XP011404761, ISSN: 0018-9456, DOI: 10.1109/TIM.2011.2170889**

**Description**

The present invention refers to a method of synchronization of a wireless sensor system, particularly but not exclusively employable in the field of monitoring of structures or civil works such as bridges, viaducts, buildings and so on.

The present invention also refers to a sensor system implementing the aforementioned method.

Nowadays it is known to monitor the status of a structure or civil works by preparing a system of sensors which are positioned in different points of the structure to be monitored. Such sensors can be vibration sensors, displacement sensors and so on.

It is known to configure such a sensor system according to a star configuration, i.e. by providing a centralized control device and a plurality of distributed sensors. Modal analysis is widely used in the area of the monitoring of structures or civil works, which involves extrapolating the frequencies and mode shapes of the structure being examined and then studying the evolution thereof during its life cycle. To carry out this type of analysis, the first step is to simultaneously acquire, and in multiple points, the vibrations of the structure induced by environmental effects. Therefore, synchronous acquisition of detection data is necessary in this area. In fact, consider the case in which a plurality of M wireless sensors have been arranged in an area of a structure or civil work that must simultaneously acquire a certain quantity X.

Each sensor will observe a continuous time signal $x_m(t)$ which is then sampled. In this case, it would be desirable for all sensors to start sampling at a predetermined time $t_0$ with a frequency $f_s$ thus obtaining for each sensor a sequence of n samples $x_m[t_0+n/f_s]$. In reality, it happens instead that each sensor starts sampling at an instant $t_m=t_0+\delta_{tm}$ and with a frequency $f_m=f_s(1+\delta_{fm})$, obtaining sequences $x_m[t_0+\delta_{tm}+n/(f_s(1+\delta_{fm}))]$ and therefore acquisition is not synchronized. Non-idealities linked to sampling dyssynchrony were modelled by means of a contribution $\delta_{tm}$ representing a time error on the start of the sampling and a contribution $\delta_{fm}$ representing an error on the nominal sampling frequency. Both of these errors ultimately come from the uncertainty about the actual frequency of the oscillator of each sensor. Each sensor has in fact a time reference based on its own oscillator that is different to a certain extent from that of the others. In addition, each sensor has its own control unit programmed to start sampling the continuous time signal $x_m(t)$ at time $t_0$; such programming is not sufficient to guarantee synchronised acquisition precisely in light of the non-ideality of the oscillators of the individual sensors that results in the occurrence of the aforementioned errors.

In order to solve the problem related to the synchronous acquisition of the sensors it is known to arrange a wired connection between the centralized control device and each of the sensors of the sensor system. In this case, the centralized control device sends respective clock pulses to the sensors. The reception by the single sensor of the relative clock pulse results in the start of the sampling of the continuous time signal $x_m(t)$ under observation. In other words, the sampling of the sensors is synchronised thanks to these clock pulses being sent. This synchronisation methodology is not easily applicable to the case of wireless sensor systems because such sensors communicate using radio protocols which as is known do not guarantee a known and constant response latency especially in scenarios where it is necessary to send numerous data packets. In addition, in many protocols there are limits on the transmission duty cycle, so depending on the desired acquisition frequency it is not guaranteed that it is possible to send sufficiently close sampling pulses.

The article by Bing Jang et al: "A clock drift compensation method for synchronous sampling in sensor networks", Measurement Science and Technology, IOP, Bristol, GB, vol. 30, no. 2, 17 January 2019, page 25103 describes a clock drift compensation method for synchronous samplings.

The object of the present invention is to obviate the aforementioned drawbacks and in particular to devise a synchronisation method that is capable of synchronising a wireless sensor system in a sufficiently accurate manner for the application scenario considered.

Another object of the present invention is to realize a sensor system that implements the aforementioned synchronisation method.

This and other objects according to the present invention are achieved by realizing a synchronisation method of a wireless sensor system as set forth in claim 1 and a sensor system as set forth in claim 5.

Further features of the synchronisation method of a wireless sensor system and of the sensor system are the subject-matter of the dependent claims.

The features and the advantages of a synchronisation method of a wireless sensor system and of the sensor system according to the present invention will become more apparent from the following exemplary and nonlimiting description of the accompanying schematic drawings in which:

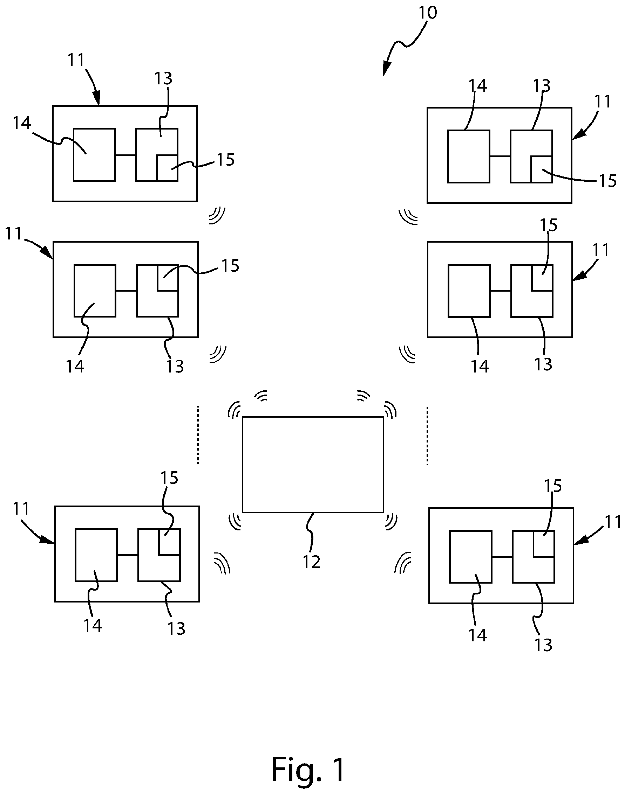

- Figure 1 is a schematic block view of a sensor system according to the present invention;

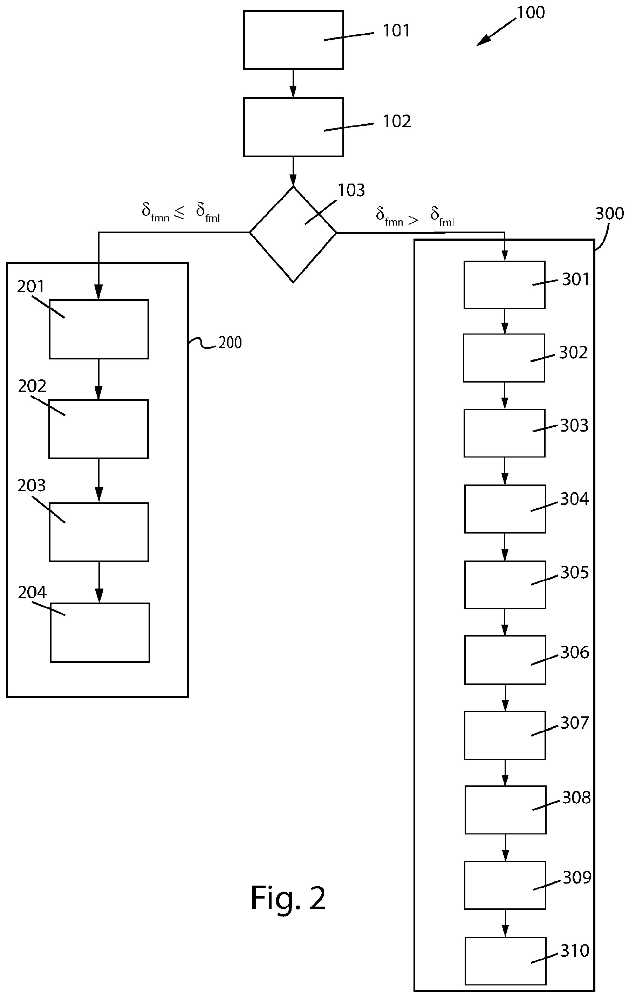

- Figure 2 is a flowchart depicting the synchronisation method according to the present invention.

With reference to the figures, a wireless sensor system for the monitoring of civil structures is shown, overall indicated with 10.

Such a sensor system 10 comprises a plurality of sensors 11 configured to communicate wirelessly and a central processing and control unit 12, for example a terminal such as a personal computer or a server and so on, configured to communicate with the sensors 11 wirelessly. The sensors 11 are equal to M in number and are indicated with an order number m ranging from 1 to M.

In the present discussion, the term "to communicate wirelessly" is intended to indicate the capacity to transmit and receive data over a wireless connection in accordance with any wireless communication protocol, for example the so-called LoRa protocol.

The sensors 11 are in particular suitable for detecting quantities useful for monitoring civil structures, for example they are vibration or displacement sensors.

Each sensor 11 comprises a counting and timing device 13 and a peripheral processing and control unit 14, for example a microprocessor, associated with said counting and timing device 13; moreover, the maximum possible offset $T_{diff}$ between the counting and timing devices 13 of the sensors 11 is known. Each sensor is also configured to detect and sample a continuous time signal $x_m(t)$ wherein m indicates the m-th sensor 11. The sampling of the continuous time signal $x_m(t)$ takes place at a nominal sampling frequency $f_s$ determined by the frequency of a clock signal generated by the counting and timing device 13. The counting and timing device 13 comprises, in fact, an oscillator 15 capable of generating a clock signal at a predetermined oscillation frequency $f_c$; the peripheral processing and control unit 14 is configured to operate on the counting and timing device 13 to generate a clock signal having a frequency equal to the nominal sampling frequency $f_s$ based on a predetermined relationship between the predetermined oscillation frequency $f_c$ and the nominal sampling frequency $f_s$.

Preferably the sensors 11 are configured to vary their sampling frequency $f_s$. In this case, the peripheral processing and control unit 14 of each sensor 11 comprises a timing register $r_m$ whose value is variable and may be set by the peripheral processing and control unit 14. The counting and timing device 13 is configured to generate from the clock signal at the oscillation frequency $f_c$ a clock signal at a frequency which depends on the value of the timing register $r_m$. The oscillator of the counting and timing device 13 of the m-th sensor has a nominal maximum tolerance $\delta_{fmn}$.

In detail, the communication between the central processing and control unit 12 and the sensors 11 can take place according to a wireless communication protocol according to which the sensors 11 are configured to assume for a predetermined time range a state of continuous reception during which they can receive data. Furthermore, such wireless communication protocol supports multicast functionality i.e. it allows to simultaneously transmit multicast messages from the central processing and control unit 12 to the sensors 11.

Preferably the central processing and control unit 12 is provided with an accurate time reference with respect to the desired synchronisation needs. For example, the central processing and control unit 12 can be equipped with a GPS reference that allows performing a very accurate time synchronisation, or with a very accurate reference oscillator, such that the maximum time offset with respect to the absolute time is much lower than $T_{diff}$ i.e. at least two orders of quantity lower than $T_{diff}$. The synchronisation method 100 according to the present invention is implementable by the above-described sensor system 10 and will be described below.

Consider first that each sensor 11 starts sampling at an instant $t_m = t_0 + \delta_{tm}$ and with a frequency $f_m = f_s(1+\delta_{fm})$ wherein $t_0$ is the nominal sampling start instant, $\delta_{tm}$ indicates a time error on the start of the sampling and $f_s$ is the nominal sampling frequency, $\delta_{fm}$ indicates an error on the nominal sampling frequency and is the maximum tolerance of the oscillator of the counting and timing device 13 of the m-th sensor. The unsynchronised signal sequence sampled by the m-th sensor is $x_m[t_0 + \delta_{tm} + n/(f_s(1+\delta_{fm}))]$. The nominal duration of the sampling window is indicated with $T_c$ and with k the number of samples to be acquired in that sampling window and with $f_s$ the nominal sampling frequency; these quantities are linked by the following expression $T_c = k/f_s$.

The duration of the real sampling window of the m-th sensor is instead obtained from the following expression $T_{cm} = k/(f_s(1+\delta_{fm}))$ which takes into account the non-ideality of the sampling frequency.

Thus the time offset $\delta_t$ at the end of the sampling window is given by the following expression $\delta_t = T_c - T_{cm} = k/f_s - k/(f_s(1+\delta_{fm}))$.

It is indicated with $\tau_d$ the maximum predetermined synchronisation error that one decides to tolerate in a given application.

For example, the maximum predetermined synchronisation error $\tau_d$ may be at least 100 times smaller than the minimum oscillation period corresponding to the maximum modal frequency typical of the civil structure to be monitored.

For example consider the case where the civil structure has three vibration modes, a first vibration mode at the frequency of 1Hz corresponding to a period $T_1 = 1s$, a second vibration mode at the frequency of 5Hz corresponding to a period $T_2 = 200ms$, a third vibration mode at the frequency of 10Hz corresponding to a period $T_3 = 100ms$. In this case, the maximum predetermined synchronisation error $\tau_d$ equal to $T_3/100 = 1ms$ is set.

In this case, it is necessary for the time offset $\delta_t$ to be smaller than the predetermined maximum tolerable synchronisation error $\tau_d$, that is, it is necessary that $\tau_d > \delta t$.

The boundary condition is that at which the time offset $\delta_t$ is equal to the predetermined maximum tolerable synchronisation error $\tau_d$. Therefore, by placing $\tau_d = \delta_t$ it is obtained that $\delta_{fml} = (\tau_d \cdot f_s)/(k-(\tau_d \cdot f_s))$ wherein $\delta_{fml}$ indicates the limit maximum tolerance of the oscillator of the counting and timing device 13 of the m-th sensor. Based on the maximum nominal tolerance available of the oscillator, and on other design data, it can be verified in a first case that $\delta_{fmn} \leq \delta_{fml}$ and then

$\delta_{fmn} \leq (\tau_d \cdot f_s)/(k-(\tau_d \cdot f_s))$ or in a second case that $\delta_{fmn} > \delta_{fml}$ and thus $\delta_{fmn} > (\tau_d \cdot f_s)/(k-(\tau_d \cdot f_s))$.

The first case corresponds to the case in which $\delta_t \leq \tau_d$; in this case all the samples k acquired have a desynchronisation smaller than $\tau_d$, so for the application being examined they can be considered as synchronised. The second case corresponds to the case in which $\delta_t > \tau_d$; in this case some of the k-samples acquired have a desynchronisation greater than $\tau_d$ and therefore the acquisitions cannot be considered as synchronised.

The synchronisation method 100 first comprises the step in which the sensor system 10 is provided and it is arranged 101 on a civil structure.

Then the limit maximum tolerance of the oscillator $\delta_{fml}$ is calculated 102 on the basis of the nominal sampling frequency $f_s$, the predetermined maximum tolerable synchronisation error $\tau_d$ and the number of samples to be acquired in a sampling window $T_c$ at said nominal sampling frequency $f_s$.

Next, it is provided for the step in which the nominal maximum tolerance $\delta_{fmn}$ is compared 103 with the previously calculated limit maximum tolerance $\delta_{fml}$.

If $\delta_{fmn} \leq \delta_{fml}$ the synchronisation method 100 envisages performing a first-level synchronisation 200 comprising the steps of:

- at an initial tuning instant equal to $t_a$-$T_{diff}$, placing 201 the sensors 11 in a state of continuous reception for a continuous reception time window having a duration greater than $2T_{diff}$ wherein $t_a$ indicates the monitoring start instant;
- at the monitoring start instant $t_a$ sending 202 wirelessly via the central processing and control unit 12 a single multicast monitoring start message addressed to all the sensors 11;
- receiving 203 via the sensors 11 the multicast monitoring start message;
- initiating 204 via the peripheral processing and control units 14 of the sensors 11 the sampling of the continuous time signal $x_m(t)$ at the sampling start time $t_0$.

In particular, at the initial tuning instant the peripheral processing and control units 14 place and maintain the respective sensors 11 in the state of continuous reception using their respective counting and timing device 13.

In light of the initial tuning instant and of the duration of the continuous reception time window the sensors 11 are certainly in the state of continuous reception at the monitoring start instant $t_a$.

Preferably, the synchronisation method 100 comprises a step in which the time difference taken by the wireless signal to reach the different sensors 11 is calculable as $t_l = \delta_{distance}/C$ wherein $\delta_{distance}$ is the maximum difference between the distance of the sensors 11 from the central processing and control unit 12. This step is performed considering that the wireless signal propagates in air at a speed approximately equal to that of light in vacuum c.

Generally the time difference $t_l$ is very little compared to the other non-idealities in play. Based on the geographical area covered by the sensor system, it must still be evaluated in relation to the required synchrony requirements.

If the time difference $t_l$ taken by the wireless signal to reach the different sensors 11 is considered sufficiently little based on the application then it is considered that the multicast monitoring start message is approximately received at the same time by the different sensors 11.

For example, the time difference $t_l$ taken by the wireless signal to reach the different sensors 11 is considered sufficiently little if it is found that $t_1 << \tau_d$ i.e. that $t_l$ is at least two orders of quantity lower than the maximum predetermined synchronisation error $\tau_d$ since the maximum offset between the sampling start signals must be much lower than the maximum allowed synchronisation error.

In this case, the monitoring start instant $t_a$ is considered to correspond to the sampling start time $t_0$ and the sample sequences detected by the sensors 11 are: $x_m(t_0+n/(f_s(1+\delta_{fmn})))$.

The sending of the multicast monitoring start message wirelessly to start sampling allows to correct the time error on the start of the sampling $\delta_{tm}$.

If $\delta_{fmn} > \delta_{fml}$ the synchronisation method 100 envisages performing a second-level synchronisation 300 comprising the steps:

- at an initial tuning instant equal to $t_a$-$T_{diff}$, placing 301 the sensors 11 in a state of continuous reception for a continuous reception time window having a duration greater than $2T_{diff}+T_{cal}$ wherein $t_a$ indicates the monitoring start instant, $T_{diff}$ indicates the maximum time offset between the counting and timing devices 13 and $T_{cal}$ indicates the time range elapsing between two consecutive multicast messages;
- at a first monitoring start instant $t_a$ sending 302 wirelessly via the central processing and control unit 12 a first multicast monitoring start message addressed to all sensors 11;
- receiving 303 via the sensors 11 the first multicast monitoring start message;
- initiating 304 via the peripheral processing and control units 14 of the sensors 11 a counting $c_m$ with the counting and timing device 13; such counting $c_m$ increases to a real oscillation frequency $f_{cm}$ of the oscillator of the counting and timing device 13;

- at a second monitoring start instant $t_a + T_{cal}$ sending 305 wirelessly via the central processing and control unit 12 a second multicast monitoring start message addressed to all the sensors 11;
- receiving 306 via the sensors 11 the second multicast monitoring start message;
- stopping and saving 307 the counting $c_m$ via the peripheral processing and control units 14 of the sensors 11;
- calculating 308, by means of the peripheral processing and control units 14 of the sensors 11, its real oscillation frequency $f_{cm}$ with the following expression $f_{cm} = c_m/T_{cal} = f_c(1 + \delta_{fmr})$ and the oscillator real maximum tolerance $\delta_{fmr}$ with the following expression $\delta_{fmr} = c_m/(T_{cal}\, f_c) - 1$;
- calculating 309, via the peripheral processing and control units 14 of the sensors 11, the value of the timing register $r_m$ with the following expression $r_m = f_{cm}/f_s$;
- setting 310, via the peripheral processing and control units 14 of the sensors 11, the value of the previously calculated timing register $r_m$ obtaining an adjusted sampling frequency $f_{sr}$ equal to the nominal sampling frequency $f_s$.

The above-described sensor system 10 is thus configured to implement the synchronisation method 100; in detail the central processing and control unit 12 and the peripheral processing and control units 14 are configured to perform the above-described actions.

In this way, the sequences of samples are of the type $x_m(t_0 + n/f_s)$; it can be understood how the synchronisation method 100 according to the present invention compensated for both the time error $\delta_{tm}$ on the start of the sampling and the error on the nominal sampling frequency $\delta_{fm}$.

In practice, the correction of the time error $\delta_{tm}$ is performed by sending the monitoring start multicast signal to all the sensors 11 causing the synchronised start of the sampling; the correction of the error on the nominal sampling frequency $\delta_{fm}$ is performed by means of a sort of "on the go" calibration of all the sensors 11 using a time range of known duration. One of the advantages of this procedure over a factory calibration of the oscillators is the robustness with respect to hardware aging phenomena, which can occur in an unpredictable way during the life cycle of a device, because it can be carried out immediately before each acquisition.

Furthermore, high accuracy on the time reference is only required on the central processing and control unit 12 which can also control hundreds of sensors 11 depending on the wireless protocol in use.

Using only two multicast messages to perform this type of calibration, the risk of incurring signal sending limits due to the duty cycle imposed by law is substantially zero; just think that depending on the signal sending limits (determined by the duty cycle of the specific radio channel) imposed by law it is sufficient to correctly size the amplitude of the time window $T_{cal}$ to respect them, that is, it is sufficient to consider a time window $T_{cal}$ large enough to overcome the duty-cycle limits.

For completeness and more clarity of discussion, the following are two examples for applying the synchronisation method 100.

Consider a first case in which m sensors 11 are applied to a civil structure with a 5 Hz vibration band, these sensors 11 being accelerometers able to connect to the LoRaWAN network. To perform a modal analysis on the civil structure, it is wished to perform synchronised samplings in a sampling window with duration $T_c = 120$ s. If the structure band is 5 Hz it is sufficient to sample at a nominal sampling frequency $f_s = 10$ Hz to respect the Nyquist sampling theorem. Assume that the nominal maximum tolerance $\delta_{fmn}$ of the frequency of the oscillator is $\delta_{fmn} = 10$ ppm (parts per million).

The LoRaWAN protocol supports the multicast functionality and provides a class of operation (class C) in which the m-th sensor 11 is in a state of continuous reception. In addition, the LoRaWAN protocol also provides a MAC level command with which each node of the network can request the current time to the Network server to which it is connected through a gateway (the central processing and control unit 12). A nominal sampling frequency of 10Hz corresponds to a nominal sampling period $T_s = 200$ ms. Suppose that in order to perform the modal analysis it is necessary to have a predetermined tolerable synchronisation error $\tau_d$ at least 100 times smaller than the period of the maximum sampling frequency; in this case therefore $\tau_d = 2$ ms. Assume that each sensor 11 requests via MAC command the current time every 12 hours from the central processing and control unit 12. Then considering this time and the nominal maximum tolerance $\delta_{fmn}$, the maximum possible offset $T_{diff}$ between the counting and timing devices 13 it results $T_{diff}$ equal to about 500ms; therefore, the continuous tuning window of each sensor 11 must be worth at least 1s.

Sampling 120 seconds at 10Hz means acquiring 1200 samples, hence k=1200. We can now obtain the limit maximum tolerance $\delta_{fml}$ of the oscillator:

$$\delta_{fml} = (\tau_d \cdot fs)/(k - \tau_d\, f_s)) = 16 \text{ ppm}$$

The oscillator of the sensors 11 therefore has a nominal maximum tolerance equal to 10ppm and therefore lower than the limit maximum tolerance $\delta_{fml}$. Finally, suppose that the civil structure has the maximum size equal to 1Km; in this case the time difference taken by the wireless signal to reach the different sensors 11 can be calculated as $t_i = \delta_{distance}/c = 1Km/c = 3\mu s$ which for the exemplary case illustrated so far is quietly negligible. In light of the above, the synchronisation method 100 is performed by implementing the first-level synchronisation 200.

Consider a second case identical to the first case in which, however, it is wished to perform synchronised samplings in a sampling window having duration $T_c = 600$ s. In this case the limit maximum tolerance $\delta_{fml}$ of the oscillator is: $\delta_{fml} = (\tau_d \cdot fs)/(k - \tau_d f_s)) = 3.3$ ppm which is lower than the nominal maximum tolerance equal to 10 ppm of the oscillator of the sensors 11.

Therefore, the synchronisation method 100 is performed by implementing the second-level synchronisation 300. Suppose that the central processing and control unit 12 with respect to the previous case also has a GPS connection that guarantees an accurate time reference at $1\mu$s. Suppose also that the oscillator of the counting and timing device 13 of the m-th sensor has an oscillation frequency $f_c = 10$ MHz.

Consider the time range elapsing between two consecutive multicast messages $T_{cal} = 1$ s.

Without taking into account the non-idealities of the oscillator, the counting $c_m$ would be worth c_m=1s * 10e6MHz = 10000000. Suppose that in this real case $c_m = 10000050$; therefore the real oscillation frequency $f_{cm}$ would be $f_{cm} = c_m/T_{cal} = 10000050$ Hz and the oscillator real maximum tolerance $\delta_{fmr}$ would be $\delta_{fmr} = c_m/(T_{cal} f_c) - 1 = 5$ ppm. In this case, the value of the timing register equal to $r_m = f_{cm}/f_s = 10000050/10 = 1000005$ is set in order to obtain the adjusted sampling frequency equal to the nominal one.

From the description made, the characteristics of the synchronisation method and of the sensor system object of the present invention are clear, as well as the relative advantages.

Finally, it is clear that the synchronisation method and the sensor system thus conceived are susceptible of numerous modifications and variations, all of which are within the scope of the invention; moreover, all the details can be replaced by technically equivalent elements. In practice, the materials used, as well as their dimensions, can be of any type according to the technical requirements.

## Claims

1. Synchronisation method (100) for a wireless sensor system (10) for monitoring civil structures comprising the steps of:

    - providing and arranging (101) a sensor system (10) on a civil structure, said sensor system (10) comprising:

        - a plurality of sensors (11) configured to communicate wirelessly and suitable for detecting quantities useful for monitoring civil structures, each of said sensors (11) comprising a counting and timing device (13) and a peripheral processing and control unit (14) associated with said counting and timing device (13), said counting and timing device (13) comprising an oscillator (15) capable of generating a clock signal at a predetermined oscillation frequency $f_c$, said peripheral processing and control unit (14) being configured to operate on the counting and timing device (13) to generate a clock signal having a frequency equal to a nominal sampling frequency $f_s$ based on a predetermined relationship between the predetermined oscillation frequency $f_c$ and the nominal sampling frequency $f_s$, said oscillator having a nominal maximum tolerance $\delta_{fmn}$, said sensors (11) being in number equal to M, each of said sensors (11) being configured to detect and sample a continuous time signal $x_m(t)$ wherein m ranges from 1 to M and indicates the m-th sensor;
        - a central processing and control unit (12) configured to communicate with said sensors (11) wirelessly;

    - calculating (102) the limit maximum tolerance of one of said oscillators (15) $\delta_{fml}$ on the basis of the nominal sampling frequency $f_s$, a predetermined maximum tolerable synchronisation error $\tau_d$ and the number of samples to be acquired in a nominal sampling window $T_c$ at said nominal sampling frequency $f_s$;
    - comparing (103) said nominal maximum tolerance $\delta_{fmn}$ with the previously calculated limit maximum tolerance $\delta_{fml}$;
    - if $\delta_{fmn} \leq \delta_{fml}$ performing a first-level synchronisation (200) comprising the steps of:

        - at an initial tuning instant equal to $t_a - T_{diff}$, by means of said peripheral processing and control unit (14), placing (201) the sensors (11) in a state of continuous reception for a continuous reception time window having a duration greater than $2T_{diff}$ wherein $t_a$ indicates the monitoring start instant and $T_{diff}$ indicates the maximum time offset between said counting and timing devices (13);
        - at the monitoring start instant $t_a$ sending (202) wirelessly via said central processing and control unit (12) a single multicast monitoring start message addressed to all the sensors (11);
        - receiving (203) via said sensors (11) the multicast monitoring start message;
        - initiating (204) via the peripheral processing and control units (14) of the sensors (11) the sampling of the continuous time signal $x_m(t)$ at a sampling start time $t_0$.

2. Synchronization method (100) according to claim 1 wherein said sensors (11) are configured to vary their sampling frequency $f_s$ and said peripheral processing and control unit (14) of each of said sensors (11) comprises a timing register $r_m$ whose value is variable and may be set by the peripheral processing and control unit (14), said counting and timing device (13) being configured to generate from the clock signal at the oscillation frequency $f_c$ a clock signal at a frequency which depends on the value of the timing register $r_m$, said synchronisation method (100) comprising the steps of: if $\delta_{fmn} > \delta_{fml}$ performing a second-level synchronisation (300) comprising the steps of:

- at an initial tuning instant equal to $t_a - T_{diff}$, by means of said peripheral processing and control unit (14), placing (301) the sensors (11) in a state of continuous reception for a continuous reception time window having a duration greater than $2T_{diff} + T_{cal}$ wherein $t_a$ indicates the monitoring start instant, $T_{diff}$ indicates the maximum time offset between said counting and timing devices (13) and $T_{cal}$ indicates the time range elapsing between two consecutive multicast messages;
- at a first monitoring start instant $t_a$ sending (302) wirelessly via the central processing and control unit (12) a first multicast monitoring start message addressed to all sensors (11);
- receiving (303) via said sensors (11) the first multicast monitoring start message;
- initiating (304) via the peripheral processing and control units (14) of the sensors (11) a counting $c_m$ with the counting and timing device (13) wherein such counting $c_m$ increases to a real oscillation frequency $f_{cm}$ of the oscillator of the counting and timing device (13);
- at a second monitoring start instant $t_a + T_{cal}$ sending (305) wirelessly via the central processing and control unit (12) a second multicast monitoring start message addressed to all the sensors (11);
- receiving (306) via said sensors (11) the second multicast monitoring start message;
- stopping and saving (307) the counting $c_m$ via the peripheral processing and control units (14) of the sensors (11);
- calculating (308), by means of the peripheral processing and control units (14) of the sensors (11), its real oscillation frequency $f_{cm}$ with the following expression $f_{cm} = c_m/T_{cal} = f_c(1 + \delta_{fmr})$ and the oscillator real maximum tolerance $\delta_{fmr}$ with the following expression $\delta_{fmr} = c_m/(T_{cal} f_c) - 1$;
- calculating (309), via the peripheral processing and control units (14) of the sensors (11), the value of the timing register $r_m$ with the following expression $r_m = f_{cm}/f_s$;
- setting (310), via the peripheral processing and control units (14) of the sensors (11), the value of the previously calculated timing register $r_m$ obtaining an adjusted sampling frequency $f_{sr}$ equal to the nominal sampling frequency $f_s$.

3. Synchronisation method (100) according to claim 1 or 2 comprising the steps of:

- calculating the time difference taken by the multicast signals to reach the sensors (11) with the following expression $t_l = \delta_{distance}/c$ wherein $\delta_{distance}$ is the maximum difference between the distance of the sensors (11) from the central processing and control unit (12);
- if $t_l \ll \tau_d$ consider $t_0 = t_a$.

4. Synchronisation method (100) according to one of the preceding claims wherein the maximum tolerable synchronisation error $\tau_d$ is estimated as at least 100 times smaller than the minimum oscillation period corresponding to the maximum modal frequency of the civil structure.

5. Sensor system (10) for monitoring civil structures configured to implement said synchronisation method (100) according to the preceding claims, said sensor system (10) comprising:

- a plurality of sensors (11) configured to communicate wirelessly and suitable for detecting quantities useful for monitoring civil structures, each of said sensors (11) comprising a counting and timing device (13) and a peripheral processing and control unit (14) associated with said counting and timing device (13), said counting and timing device (13) comprising an oscillator (15) capable of generating a clock signal at a predetermined oscillation frequency $f_c$, said counting and timing device (13) being configured to generate a clock signal having a frequency equal to a nominal sampling frequency $f_s$ based on a predetermined relationship between the predetermined oscillation frequency $f_c$ and the nominal sampling frequency $f_s$, said oscillator having a maximum nominal tolerance $\delta_{fmn}$, said sensors (11) being in number equal to M, each of said sensors (11) being configured to detect and sample a continuous time signal $x_m(t)$ wherein m ranges from 1 to M and indicates the m-th sensor;
- a central processing and control unit (12) configured to communicate with said sensors (11) wirelessly.

6. Sensor system (10) according to claim 5 wherein said sensors (11) are configured to vary their sampling frequency $f_s$

and said peripheral processing and control unit (14) of each of said sensors (11) comprises a timing register $r_m$ whose value is variable and may be set by the peripheral processing and control unit (14), said counting and timing device (13) being configured to generate from the clock signal at the oscillation frequency $f_c$ a clock signal at a frequency which depends on the value of the timing register $r_m$.

**7.** Sensor system (10) according to claim 4 or 5 wherein the central processing and control unit (12) is provided with an accurate time reference.

**Patentansprüche**

**1.** Verfahren zur Synchronisation (100) eines drahtlosen Sensorsystems (10) zur Überwachung von Bauwerken, das die folgenden Schritte umfasst:

- Bereitstellen und Anordnen (101) eines Sensorsystems (10) auf einer zivilen Struktur, wobei das Sensorsystem (10) umfasst:

- eine Vielzahl von Sensoren (11), die so konfiguriert sind, dass sie drahtlos kommunizieren, und die geeignet sind, Größen zu erfassen, die für die Überwachung ziviler Strukturen nützlich sind, wobei jeder der Sensoren (11) eine Zähl- und Zeitgebungsvorrichtung (13) und eine periphere Verarbeitungs- und Steuereinheit (14) umfasst, die mit der Zähl- und Zeitgebungsvorrichtung (13) verbunden ist, wobei die Zähl- und Zeitgebungsvorrichtung (13) einen Oszillator (15) umfasst, der in der Lage ist, ein Taktsignal mit einer vorbestimmten Schwingungsfrequenz $f_c$ zu erzeugen, wobei die periphere Verarbeitungs- und Steuereinheit (14) so konfiguriert ist, dass sie auf die Zähl- und Zeitgebungsvorrichtung (13) einwirkt, um ein Taktsignal mit einer Frequenz zu erzeugen, die gleich einer nominalen Abtastfrequenz $f_s$ ist, basierend auf einer vorbestimmten Beziehung zwischen der vorbestimmten Oszillationsfrequenz $f_c$ und der nominalen Abtastfrequenz $f_s$, wobei der Oszillator eine maximale Nenntoleranz $\delta_{fmn}$ aufweist, wobei die Anzahl der Sensoren (11) gleich M ist, wobei jeder der Sensoren (11) so konfiguriert ist, dass er ein kontinuierliches Zeitsignal $x_m(t)$ erfasst und abtastet, wobei m im Bereich von 1 bis M liegt und den m-ten Sensor bezeichnet;
- eine zentrale Verarbeitungs- und Steuereinheit (12), die so konfiguriert ist, dass sie drahtlos mit den Sensoren (11) kommuniziert;
- die Berechnung (102) der maximalen Toleranzgrenze für eine der Oszillatoren (15) $\delta_{fml}$ auf der Grundlage der Nennabtastfrequenz $f_s$, eines vorbestimmten maximal tolerierbaren Synchronisationsfehlers $\tau_d$ und der Anzahl der in einem Nennabtastfenster $T_c$ bei der Nennabtastfrequenz $f_s$ zu erfassenden Abtastwerte;
- Vergleich (103) der maximalen Solltoleranz $\delta_{fmn}$ mit der zuvor berechneten maximalen Grenztoleranz $\delta_{fml}$;
- wenn $\delta_{fmn} \leq \delta_{fml}$ Durchführung einer Synchronisation (200) der ersten Stufe, die die folgenden Schritte umfasst:

- zu einem anfänglichen Abstimmungszeitpunkt, der gleich $t_a$-$T_{diff}$ ist, mittels der peripheren Verarbeitungs- und Steuereinheit (14) die Sensoren (11) in einen Zustand des kontinuierlichen Empfangs für ein kontinuierliches Empfangszeitfenster mit einer Dauer von mehr als $2T_{diff}$ zu versetzen (201), wobei $t_a$ den Startzeitpunkt der Überwachung und $T_{diff}$ den maximalen Zeitversatz zwischen den Zähl- und Zeitgebungsvorrichtungen (13) angibt;
- zum Zeitpunkt des Überwachungsbeginns $t_a$ drahtloses Senden (202) über die zentrale Verarbeitungs- und Steuereinheit (12) einer einzigen Multicast-Überwachungsbeginnnachricht, die an alle Sensoren (11) gerichtet ist;
- Empfang (203) der Multicast-Überwachungsstartnachricht über die Sensoren (11);
- Auslösen (204) der Abtastung des kontinuierlichen Zeitsignals $x_m(t)$ über die peripheren Verarbeitungs- und Steuereinheiten (14) der Sensoren (11) zu einer Abtaststartzeit $t_0$.

**2.** Verfahren zur Synchronisation (100) nach Anspruch 1, wobei die Sensoren (11) so konfiguriert sind, dass sie ihre Abtastfrequenz $f_s$ variieren, und die periphere Verarbeitungs- und Steuereinheit (14) jedes der Sensoren (11) ein Timing-Register $r_m$ umfasst, dessen Wert variabel ist und von der peripheren Verarbeitungs- und Steuereinheit (14) eingestellt werden kann, die Zähl- und Zeitgebungsvorrichtung (13) so konfiguriert ist, dass sie aus dem Taktsignal mit der Oszillationsfrequenz $f_c$ ein Taktsignal mit einer Frequenz erzeugt, die von dem Wert des Zeitgebungsregisters $r_m$ abhängt, wobei das Synchronisationsverfahren (100) die folgenden Schritte umfasst:
wenn $\delta_{fmn} > \delta_{fml}$ Durchführung einer Synchronisation auf zweiter Ebene (300), die die folgenden Schritte umfasst:

- zu einem anfänglichen Abstimmungszeitpunkt, der gleich $t_a$-$T_{diff}$ ist, mittels der peripheren Verarbeitungs- und Steuereinheit (14), Versetzen (301) der Sensoren (11) in einen Zustand des kontinuierlichen Empfangs für ein kontinuierliches Empfangszeitfenster mit einer Dauer, die größer als $2T_{diff}$+$T_{cal}$ ist, wobei $t_a$ den Überwachungsstartzeitpunkt angibt, $T_{diff}$ den maximalen Zeitversatz zwischen den Zähl- und Zeitgebervorrichtungen (13) angibt und $T_{cal}$ den Zeitbereich angibt, der zwischen zwei aufeinanderfolgenden Multicast-Nachrichten verstreicht;
- zu einem ersten Überwachungsstartzeitpunkt $t_a$ drahtlos über die zentrale Verarbeitungs- und Steuereinheit 12 eine erste Multicast-Überwachungsstartnachricht an alle Sensoren (11) senden (302);
- Empfangen (303) der ersten Multicast-Überwachungsstartnachricht über die Sensoren (11);
- Auslösen (304) einer Zählung $c_m$ mit der Zähl- und Zeitgebungsvorrichtung (13) über die peripheren Verarbeitungs- und Steuereinheiten (14) der Sensoren (11), wobei diese Zählung $c_m$ auf eine reale Schwingungsfrequenz $f_{cm}$ des Oszillators der Zähl- und Zeitgebungsvorrichtung (13) ansteigt;
- zu einem zweiten Überwachungsstartzeitpunkt $t_a$+$T_{cal}$ drahtlos über die zentrale Verarbeitungs- und Steuereinheit (12) eine zweite Multicast-Überwachungsstartnachricht an alle Sensoren (11) zu senden (305);
- Empfangen (306) der zweiten Multicast-Überwachungsstartnachricht über die Sensoren (11);
- Anhalten und Speichern (307) der Zählung $c_m$ über die peripheren Verarbeitungs- und Steuereinheiten (14) der Sensoren (11);
- Berechnung (308) mit Hilfe der peripheren Verarbeitungs- und Steuereinheiten (14) der Sensoren (11), seiner realen Schwingungsfrequenz $f_{cm}$ mit dem folgenden Ausdruck $f_{cm}=c_m/T_{cal}=f_c(1+ \delta_{fmr})$ und die reale maximale Toleranz des Oszillators $\delta_{fmr} = c_m/(T_{cal}\ f_c)-1$;
- Berechnen (309), über die periphere Verarbeitung und Steuereinheiten (14) der Sensoren (11) den Wert des Zeitregisters $r_m$ mit dem folgenden Ausdruck $r_m=f_{cm}/f_s$;
- Einstellen (310) des Wertes des zuvor berechneten Zeitregisters $r_m$ über die peripheren Verarbeitungs- und Steuereinheiten (14) der Sensoren (11), um eine eingestellte Abtastfrequenz $f_{sr}$ zu erhalten, die gleich der nominalen Abtastfrequenz $f_s$ ist.

3. Verfahren zur Synchronisation (100) nach Anspruch 1 oder 2, das die folgenden Schritte umfasst:

- Berechnung der Zeitdifferenz, die die Multicast-Signale benötigen, um die Sensoren (11) zu erreichen, mit dem folgenden Ausdruck $t_1=\delta_{distance}/c$, wobei $\delta_{distance}$ die maximale Differenz zwischen der Entfernung der Sensoren (11) von der zentralen Verarbeitungs- und Steuereinheit (12) ist;
- wenn $t_l << \tau_d$ betrachten Sie $t_0=t_a$.

4. Verfahren zur Synchronisation (100) nach einem der vorhergehenden Ansprüche, wobei der maximal tolerierbare Synchronisationsfehler $\tau_d$ als mindestens 100-mal kleiner als die minimale Schwingungsperiode geschätzt wird, die der maximalen modalen Frequenz der zivilen Struktur entspricht.

5. Sensorsystem (10) zur Überwachung von Bauwerken, das so konfiguriert ist, dass es das Synchronisationsverfahren (100) gemäß den vorhergehenden Ansprüchen implementiert, wobei das Sensorsystem (10) umfasst:

- eine Vielzahl von Sensoren (11), die so konfiguriert sind, dass sie drahtlos kommunizieren, und die geeignet sind, Größen zu erfassen, die für die Überwachung ziviler Strukturen nützlich sind, wobei jeder der Sensoren (11) eine Zähl- und Zeitgebungsvorrichtung (13) und eine periphere Verarbeitungs- und Steuereinheit (14) umfasst, die mit der Zähl- und Zeitgebungsvorrichtung (13) verbunden ist, wobei die Zähl- und Zeitgebungsvorrichtung (13) einen Oszillator (15) umfasst, der in der Lage ist, ein Taktsignal mit einer vorbestimmten Oszillationsfrequenz $f_c$ zu erzeugen, wobei die Zähl- und Zeitgebungsvorrichtung (13) so konfiguriert ist, dass sie ein Taktsignal mit einer Frequenz erzeugt, die gleich einer nominalen Abtastfrequenz $f_s$ ist, basierend auf einer vorbestimmten Beziehung zwischen der vorbestimmten Oszillationsfrequenz $f_c$ und der nominalen Abtastfrequenz $f_s$, wobei der Oszillator eine maximale Nenntoleranz $\delta_{fmn}$ aufweist, wobei die Anzahl der Sensoren (11) gleich M ist, wobei jeder der Sensoren (11) so konfiguriert ist, dass er ein kontinuierliches Zeitsignal $x_m(t)$ erfasst und abtastet, wobei m im Bereich von 1 bis M liegt und den m-ten Sensor bezeichnet;
- eine zentrale Verarbeitungs- und Steuereinheit (12), die so konfiguriert ist, dass sie drahtlos mit den Sensoren (11) kommuniziert.

6. Sensorsystem (10) nach Anspruch 5, wobei die Sensoren (11) so konfiguriert sind, dass sie ihre Abtastfrequenz $f_s$ variieren, und die periphere Verarbeitungs- und Steuereinheit (14) jedes der Sensoren (11) ein Zeitregister $r_m$ umfasst, dessen Wert variabel ist und von der peripheren Verarbeitungs- und Steuereinheit (14) eingestellt werden kann, wobei die Zähl- und Zeitgebungsvorrichtung (13) so konfiguriert ist, dass sie aus dem Taktsignal mit der Oszillationsfrequenz $f_c$ ein Taktsignal mit einer Frequenz erzeugt, die von dem Wert des Zeitgebungsregisters $r_m$

abhängt.

7. Sensorsystem (10) nach Anspruch 4 oder 5, wobei die zentrale Verarbeitungs- und Steuereinheit (12) mit einer genauen Zeitreferenz ausgestattet ist.

**Revendications**

1. Procédé de synchronisation (100) pour un système de capteurs sans fil (10) destiné à la surveillance de structures civiles, comprenant les étapes suivantes:

   - fournir et disposer (101) un système de capteurs (10) sur une structure civile, ledit système de capteurs (10) comprenant:

      - une pluralité de capteurs (11) configurés pour communiquer sans fil et aptes à détecter des quantités utiles pour la surveillance de structures civiles, chacun desdits capteurs (11) comprenant un dispositif de comptage et de synchronisation (13) et une unité périphérique de traitement et de commande (14) associée audit dispositif de comptage et de synchronisation (13), ledit dispositif de comptage et de synchronisation (13) comprenant un oscillateur (15) capable de générer un signal d'horloge à une fréquence d'oscillation prédéterminée $f_c$, ladite unité périphérique de traitement et de commande (14) est configurée pour agir sur le dispositif de comptage et de synchronisation (13) afin de générer un signal d'horloge ayant une fréquence égale à une fréquence d'échantillonnage nominale $f_s$ sur la base d'une relation prédéterminée entre la fréquence d'oscillation prédéterminée $f_c$ et la fréquence d'échantillonnage nominale $f_s$, ledit oscillateur a une tolérance maximale nominale $\delta_{fmn}$, lesdits capteurs (11) étant en nombre égal à M, chacun desdits capteurs (11) étant configuré pour détecter et échantillonner un signal à temps continu $x_m(t)$ dans lequel m va de 1 à M et indique le m-ième capteur;
      - une unité centrale de traitement et de contrôle (12) configurée pour communiquer sans fil avec lesdits capteurs (11);
      - calcul (102) de la limite maximale de tolérance d'un desdits oscillateurs (15) $\delta_{fml}$ sur la base de la fréquence d'échantillonnage nominale $f_s$, d'une erreur de synchronisation maximale tolérable prédéterminée $\tau_d$ et du nombre d'échantillons à acquérir dans une fenêtre d'échantillonnage nominale $T_c$ à ladite fréquence d'échantillonnage nominale $f_s$;
      - comparer (103) ladite tolérance maximale nominale $\delta_{fmn}$ avec la tolérance maximale limite calculée précédemment $\delta_{fml}$;
      - si $\delta_{fmn} \leq \delta_{fml}$ effectuer une synchronisation de premier niveau (200) comprenant les étapes suivantes:

         - à un instant de réglage initial égal à $t_a$-$T_{diff}$, au moyen de ladite unité périphérique de traitement et de commande (14), placer (201) les capteurs (11) dans un état de réception continue pour une fenêtre temporelle de réception continue ayant une durée supérieure à $2T_{diff}$ où $t_a$ indique l'instant de début de surveillance et $T_{diff}$ indique le décalage temporel maximal entre lesdits dispositifs de comptage et de synchronisation (13);
         - à l'instant de démarrage de la surveillance $t_a$, envoi (202) sans fil, par l'intermédiaire de ladite unité centrale de traitement et de commande (12), d'un message unique de démarrage de la surveillance par multidiffusion adressé à tous les capteurs (11);
         - réception (203), par l'intermédiaire desdits capteurs (11), du message de démarrage de la surveillance par multidiffusion;
         - lancer (204), par l'intermédiaire des unités périphériques de traitement et de commande (14) des capteurs (11), l'échantillonnage du signal temporel continu $x_m(t)$ à un moment de début d'échantillonnage $t_0$.

2. Procédé de synchronisation (100) selon la revendication 1 dans lequel lesdits capteurs (11) sont configurés pour faire varier leur fréquence d'échantillonnage $f_s$ et ladite unité périphérique de traitement et de commande (14) de chacun desdits capteurs (11) comprend un registre de temporisation $r_m$ dont la valeur est variable et peut être réglée par l'unité périphérique de traitement et de commande (14), ledit dispositif de comptage et de synchronisation (13) étant configuré pour générer à partir du signal d'horloge à la fréquence d'oscillation $f_c$ un signal d'horloge à une fréquence qui dépend de la valeur du registre de synchronisation $r_m$, ledit procédé de synchronisation (100) comprenant les étapes de:
   si $\delta_{fmn} > \delta_{fml}$ effectuer une synchronisation de deuxième niveau (300) comprenant les étapes suivantes:

- à un instant de réglage initial égal à $t_a$-$T_{diff}$, au moyen de ladite unité périphérique de traitement et de commande (14), placer (301) les capteurs (11) dans un état de réception continue pour une fenêtre temporelle de réception continue ayant une durée supérieure à $2T_{diff}$+$T_{cal}$ dans laquelle $t_a$ indique l'instant de début de surveillance, $T_{diff}$ indique le décalage temporel maximal entre lesdits dispositifs de comptage et de synchronisation (13) et $T_{cal}$ indique l'intervalle de temps qui s'écoule entre deux messages de multidiffusion consécutifs;

- à un premier instant de démarrage de la surveillance $t_a$, envoi (302) sans fil, par l'intermédiaire de l'unité centrale de traitement et de commande 12, d'un premier message de démarrage de la surveillance par multidiffusion adressé à tous les capteurs (11);

- réception (303), via lesdits capteurs (11), du premier message de démarrage de la surveillance multidiffusion;

- déclencher (304) via les unités périphériques de traitement et de commande (14) des capteurs (11) un comptage $c_m$ avec le dispositif de comptage et de synchronisation (13) dans lequel ce comptage $c_m$ augmente jusqu'à une fréquence d'oscillation réelle $f_{cm}$ de l'oscillateur du dispositif de comptage et de synchronisation (13);

- à un deuxième instant de début de surveillance $t_a$+$T_{cal}$ envoyer (305) sans fil via l'unité centrale de traitement et de commande (12) un deuxième message de début de surveillance multidiffusion adressé à tous les capteurs (11);

- réception (306), par l'intermédiaire desdits capteurs (11), du deuxième message de démarrage de la surveillance par multidiffusion;

- l'arrêt et la sauvegarde (307) du comptage $c_m$ via les unités périphériques de traitement et de commande (14) des capteurs (11);

- en calculant (308), au moyen des unités périphériques de traitement et de commande (14) des capteurs (11), sa fréquence réelle d'oscillation $f_{cm}$ avec l'expression suivante $f_{cm}$=$c_m$/$T_{cal}$=$f_c$(1+ $\delta_{fmr}$) et la tolérance maximale réelle de l'oscillateur $\delta_{fmr}$ avec l'expression suivante $\delta_{fmr}$ = $c_m$/($T_{cal}$ $f_c$)-1;

- calculer (309), par l'intermédiaire du traitement périphérique et les unités de commande (14) des capteurs (11), la valeur du registre de synchronisation $r_m$ avec l'expression suivante $r_m$=$f_{cm}$/$f_s$;

- réglage (310), par l'intermédiaire des unités périphériques de traitement et de commande (14) des capteurs (11), de la valeur du registre de synchronisation précédemment calculé $r_m$ pour obtenir une fréquence d'échantillonnage ajustée $f_{sr}$ égale à la fréquence d'échantillonnage nominale $f_s$.

3. Procédé de synchronisation (100) selon la revendication 1 ou 2 comprenant les étapes suivantes:

   - calculer la différence de temps nécessaire aux signaux de multidiffusion pour atteindre les capteurs (11) à l'aide de l'expression suivante $t_l$=$\delta_{distance}$/c dans laquelle $\delta_{distance}$ est la différence maximale entre la distance des capteurs (11) et l'unité centrale de traitement et de commande (12);
   - si $t_l$ << $\tau_d$ considérer $t_0$=$t_a$.

4. Procédé de synchronisation (100) selon l'une des revendications précédentes dans lequel l'erreur de synchronisation maximale tolérable $\tau_d$ est estimée comme étant au moins 100 fois plus petite que la période d'oscillation minimale correspondant à la fréquence modale maximale de la structure civile.

5. Système de capteurs (10) pour la surveillance de structures civiles configuré pour mettre en œuvre ledit procédé de synchronisation (100) selon les revendications précédentes, ledit système de capteurs (10) comprenant:

   - une pluralité de capteurs (11) configurés pour communiquer sans fil et aptes à détecter des quantités utiles pour la surveillance de structures civiles, chacun desdits capteurs (11) comprenant un dispositif de comptage et de synchronisation (13) et une unité périphérique de traitement et de commande (14) associée audit dispositif de comptage et de synchronisation (13), ledit dispositif de comptage et de synchronisation (13) comprenant un oscillateur (15) capable de générer un signal d'horloge à une fréquence d'oscillation prédéterminée $f_c$, ledit dispositif de comptage et de synchronisation (13) est configuré pour générer un signal d'horloge ayant une fréquence égale à une fréquence d'échantillonnage nominale $f_s$ sur la base d'une relation prédéterminée entre la fréquence d'oscillation prédéterminée $f_c$ et la fréquence d'échantillonnage nominale $f_s$, ledit oscillateur a une tolérance nominale maximale $\delta_{fmn}$, lesdits capteurs (11) étant en nombre égal à M, chacun desdits capteurs (11) étant configuré pour détecter et échantillonner un signal à temps continu $x_m(t)$ dans lequel m va de 1 à M et indique le m-ième capteur;
   - une unité centrale de traitement et de contrôle (12) configurée pour communiquer sans fil avec lesdits capteurs (11).

6. Système de capteurs (10) selon la revendication 5 dans lequel lesdits capteurs (11) sont configurés pour faire varier leur fréquence d'échantillonnage $f_s$ et ladite unité périphérique de traitement et de commande (14) de chacun desdits capteurs (11) comprend un registre de temporisation $r_m$ dont la valeur est variable et peut être réglée par l'unité périphérique de traitement et de commande (14), Ledit dispositif de comptage et de synchronisation (13) est configuré pour générer, à partir du signal d'horloge à la fréquence d'oscillation $f_c$, un signal d'horloge à une fréquence qui dépend de la valeur du registre de synchronisation $r_m$.

7.  Système de capteurs (10) selon la revendication 4 ou 5, dans lequel l'unité centrale de traitement et de commande (12) est dotée d'une référence temporelle précise.

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BING JANG et al.** A clock drift compensation method for synchronous sampling in sensor networks. *Measurement Science and Technology*, 17 January 2019, vol. 30 (2), 25103